# EUROPEAN PATENT APPLICATION

(11) **EP 1 801 444 A2**
(43) Date of publication of application: **27.06.2007**
(21) Application number: 06380312.6
(22) Date of filing: 27.11.2006
(51) Int. Cl.: F16D 23/06

(54) **Modified synchronizing hub and process for the manufacture thereof**

(30) Priority: 23.12.2005 ES 200503175
(71) Applicant: PMG Asturias Powder Metal, S.A., 33682 Mieres, Asturias (ES)
(72) Inventor: Castro Menendez, Diego, 33682 Mieres - Asturias (ES); Polo Coca, Guillermo, 33682 Mieres - Asturias (ES); Lopez Martinez, Ignacio, 33682 Mieres - Asturias (ES); Presa Lopez, Ivan Jose, 33682 Mieres - Asturias (ES)
(74) Representative: Carvajal y Urquijo, Isabel

(57) **Abstract**

The invention relates to a modified synchronizing hub and a process for the manufacture thereof, said hub being of the type used in gearboxes, said hub comprising a body (1) with a substantially cylindrical configuration having an outer radius for defining a perimetric surface (4) and an inner radius for defining a grooved central housing (3), having in said perimetric surface (4) at least one hole (7) made according to a radial direction, said hole (7) being configured to connect a locking mechanism to said synchronizing hub The hub is characterized in that the body (1) has at least one cavity (2) located between the inner radius and the outer radius the angular position of which is located in a point of the radius determined by the position of the at least one hole (7).

## Description

### FIELD AND OBJECT OF THE INVENTION

The invention is included within the field of the manufacture of auxiliary components in the automotive field and more specifically it relates to a new design of a synchronizing hub manufactured with powder metal technology for a gearbox which allows efficiently housing the radial fixing or locking mechanism so as to optimize its performance.

### PRIOR STATE OF THE ART

Synchronizing hubs are mechanical elements forming part of the gearboxes of vehicles. The competitive automobile market develops quickly, marking more and more ambitious challenges as regards the performance that must be met by the manufactured vehicles.

By extension, the new gear boxes entail a challenge in the technical demands of the manufacture of synchronizing hubs, both from the point of view of its geometric design and of its mechanical properties.

It has been shown that synchronizing hubs with a radial fixing system to the coupling sleeve considerably improve the performance of the gearbox. An example, among others, is the locking mechanism based on a spring and a ball housed in a hole for that purpose.

There are currently solutions based on this type of mechanism such as those set forth in patents EP1460297, EP1067318, US4836348, US6811010, US4641734, J P2005155829 and J P2005163833.

However, these solutions have technical limitations for their embodiment mainly due to the problems of space for housing the locking mechanism, to the problem of the borehole wall width and depth as well as due to the great hardness of this type of parts manufactured by means of powder metal sintering processes, which causes the making of holes with these characteristics to be difficult with the machining technologies available today. This makes it very expensive and can even make the manufacture impossible.

To that end, the need has been detected to implement a modified synchronizing hub, as well as its manufacturing process, such that in the body of said hub there are a series of cavities which allow carrying out the machining step of the mentioned holes without the occurrence of the mentioned problems.

The present invention represents a radical change in the manufacture of this type of synchronizing hubs and solves the limitations describes above which prevent the improvement of the performance of synchronizing hubs manufactured by powder metallurgy (sintering).

This objective is achieved by means of the invention as defined in claims 1 and 5, and the dependent claims define the preferred embodiments of the invention.

### DESCRIPTION OF THE INVENTION

A first aspect of the invention relates to a modified synchronizing hub of the type used in gearboxes, said hub comprising a body with a substantially cylindrical configuration having an outer radius for defining a perimetric surface and an inner radius for defining a grooved central housing, said perimetric surface having at least one hole made according to a radial direction, said hole being configured to connect a locking mechanism to said synchronizing hub, characterized in that the body has at least one cavity located between the inner radius and the outer radius the angular position of which is located in a point of the radius determined by the position of the at least one hole.

In this way and thanks to the arrangement of the mentioned cavities, the machining step of the holes can be carried out more easily, the locking mechanism being able to be housed within the hub. For that purpose, positions that do not compromise the mechanical strength of the part are identified and part of the center thereof is hollowed out, said hollowing out being materialized in a plurality of cavities located in the body of the hub as previously described.

Therefore, a space integrated in the hub itself is provided, which allows housing the appropriate locking mechanism and further allows making the entrance and exit hole in the ring of the hub by making a borehole in the radial direction and with a much less demanding stock removal.

According to another aspect of the invention, the body can have a perimetric recess determining an outer partition together with the perimetric surface, the cavities being located near the innermost wall of said partition.

According to another aspect of the invention, the cavities can have an open slot in the wall closest to the grooved central housing. The function of said open slot is to serve as a retention area for one of the components of the locking mechanism.

Another main object of the present invention is the process for manufacturing a modified synchronizing hub of the type used in gearboxes, said hub comprising:
a body with a substantially cylindrical configuration having an outer radius for defining a perimetric surface and an inner radius for defining a grooved central housing,
having in said perimetric surface at least one hole made according to a radial direction, said hole being configured to connect a locking mechanism to said synchronizing hub,
said process comprising:
   a first pressing step,
   a second sintering step; and
   a third machining step for defining said at least one hole;

The process is particularly characterized in that at least one cavity located in the body between the inner radius and the outer radius the angular position of which is located in a point of the radius determined by the position of the at least one hole is formed in the pressing step.

In this way, the mentioned cavities are formed in the pressing step using molds designed for that purpose such that when the part has been sintered with the mentioned cavities, stresses and complicated operations are prevented during the subsequent machining step of the holes, because the stock removal during said step is much less demanding given that the hollowing out of material has been carried out in the pressing step and has been materialized in the mentioned cavities, and in the machining step and specifically in the boring of the holes, the thickness to be bored is considerably reduced given that only a space of material between the perimetric wall of the body and the outermost wall of the cavities must be bored.

In the same way and thanks to the described process, synchronizing hubs can be manufactured in which the required tolerances and subsequently the correct operation of the clamping mechanism are improved. On the other hand, the reduction of the machining in each part allows a longer duration in the life of the used tools and therefore, the costs associated to the maintenance of the production equipment are reduced. Furthermore, the new configuration allows the use of less material in each part with the subsequent reduction in the weight of each manufactured part.

### DESCRIPTION OF THE DRAWINGS

A series of drawings are very briefly described below which aid in better understanding the invention and which are expressly related to embodiments of said invention which are set forth as illustrative and non-limiting examples thereof.

Figure 1 shows a view of the modified synchronizing hub object of the present invention.

Figure 2 shows a sectional view of the modified synchronizing hub according to section plane I-I of Figure 1.

### DESCRIPTION OF AN EMBODIMENT OF THE INVENTION

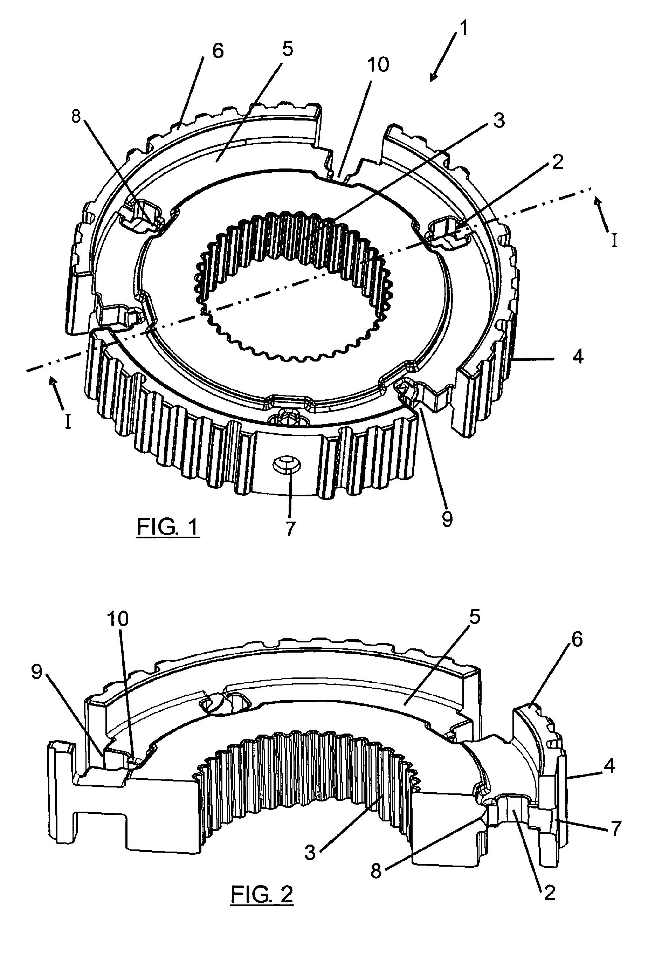

As can be observed in figure 1, the synchronizing hub (1) object of the present invention has a substantially cylindrical body and has a grooved central housing (3) determined by an inner radius, the grooves thereof being parallel to the axis of rotation of said body. It further has an outer radius defining a perimetric surface (4) which is also groove according to a direction parallel to the axis of rotation of the body (1), the body (1) having a perimetric recess (5) defining a partition (6) together with the mentioned perimetric surface (4).

In said perimetric recess (5) there are arranged a plurality of cavities (2) which for this embodiment of the invention will be 3, this number being merely orientative and never limiting for the scope of protection of the invention. The mentioned cavities are arranged near the innermost wall of the partition (6) and are distributed equidistantly from each other along the perimetric recess (5), in this case and since it has three cavities, the later are separated by an angular magnitude of 120°.

A plurality of holes (7) are arranged on the perimetric surface (4), which holes are located such that their position coincides with the cavity (2), being located between the inner radius and the outer radius in an angular position located in a point of the radius determined by the position if each of the holes (7). In other words, for each of the holes (7), its corresponding cavity (2) is located in its same radial path.

With the described configuration, the thickness which must be traversed in the boring step to define the holes (7) is considerably reduced, thereby reducing the risk of breaking the body (1) during said step. Furthermore, the hollow defined by the cavity (2) leaves a space that is essential for the penetration of the boring tool and for the ejection of chips during the boring step.

As can be seen in more detail in figure 2, in this embodiment, the geometry of the cavities (2) is rectangular prismatic, the edges thereof being rounded. The cavity (2) can traverse the body (1) but can also be a blind hole. The cavity (2) will further have in its innermost wall an open slot (8) intended to retain part of the locking mechanism (not shown in the figure). In the same way, the geometry and size of the cavities will depend on the size and shape of the locking mechanism.

An optimal resistant behavior is achieved with the geometry and location of the cavities (2) because there is a dimensional equilibrium allowing an equal distribution of forces to which said hub is subjected during its operation.

The perimetric surface (4) has a plurality of discontinuities on which respective openings (9) are made which can have different shapes, and which further have in the wall closest to the central housing (3) an open slot (10) similar to the open slot (8) made on the mentioned cavities (2).

In this embodiment, the start of the cavities (2) is located in the radial direction at a distance between 0 and 10 millimeters with respect to the inner wall of the partition (6). As regards the maximum width in the tangential direction of the cavities (2), it can vary between 4 and 25 millimeters. The depth of the cavities (2) will be equivalent to the height of the body (1) on which they have been made in the event that the cavity (2) is a through cavity. If the cavity (2) is a blind cavity, the inner wall will have an axial thickness between 1 and 10 millimeters.

As regards the manufacturing process, the main novelty thereof lies in the fact that the cavities (2) are made in the pressing step itself using special molds, i.e. before the boring step, which is fundamental because they aid in said boring and in the ejection of the material removed during the machining as well as in facilitating the dissipation of the heat produced during the boring.

The machining process of the hole (7) is made feasible by the presence of the cavity (2), because the cavity (2) prevents the boring in an area where the thickness of the wall is not enough for carrying it out. If this window did not exist, the bored area would have a serious surface deformation and areas with burnt material and therefore with an unsuitable metallographic structure. The hole (7) for the spring has a depth between 8 and 20 millimeters and a diameter between 4 and 8 millimeters.

## Claims

1. A modified synchronizing hub of the type used in gearboxes, said hub comprising a body (1) with a substantially cylindrical configuration having an outer radius for defining a perimetric surface (4) and an inner radius for defining a grooved central housing (3), having in said perimetric surface (4) at least one hole (7) made according to a radial direction, said hole (7) being configured to connect a locking mechanism to said synchronizing hub, **characterized in that** the body (1) has at least one cavity (2) located between the inner radius and the outer radius the angular position of which is located in a point of the radius determined by the position of the at least one hole (7).

2. A hub according to claim 1, **characterized in that** the body (1) has a perimetric recess (5) determining an outer wall (6) together with the perimetric surface (4), the cavities (2) being located near the innermost wall of said partition (6).

3. A hub according to previous claims, **characterized in that** the cavities (2) and therefore the holes (7) are arranged in positions that are equidistant from each other.

4. A hub according to previous claims, **characterized in that** the cavities (2) have an open slot (8) in their wall closest to the grooved central housing (3).

5. A process for manufacturing a modified synchronizing hub of the type used in gearboxes, said hub comprising:
a body (1) with a substantially cylindrical configuration having an outer radius for defining a perimetric surface (4) and an inner radius for defining a grooved central housing (3)
having in said perimetric surface (4) at least one hole (7) made according to a radial direction, said hole (7) being configured to connect a locking mechanism to said synchronizing hub,
said process comprising:
a first pressing step,
a second sintering step; and
a third machining step for defining said at least one hole;
**characterized in that** at least one cavity (2) located in the body between the inner radius and the outer radius the angular position of which is located in a point of the radius determined by the position of the at least one hole (7) is formed in the pressing step.
